# EUROPÄISCHE PATENTSCHRIFT

(11) **EP 0 357 814 B1**
(45) Veröffentlichungstag und Bekanntmachung des Hinweises auf die Patenterteilung: **29.06.1994**
(21) Anmeldenummer: 88114508.0
(22) Anmeldetag: 06.09.1988
(51) Int. Cl.: G11B 15/68

(54) **Video Kassetten-Wiedergabegerät zum wahlweisen Abspielen von Videokassetten**
Video cassette reproducing apparatus for optionally playing video cassettes
Appareil de lecture de cassettes vidéo pour la lecture au choix de cassettes vidéo

(43) Veröffentlichungstag der Anmeldung: 14.03.1990
(73) Patentinhaber: von Neumann, Christian G., D-21266 Jesteburg (DE)
(72) Erfinder: von Neumann, Christian G., D-21266 Jesteburg (DE)
(74) Vertreter: Schupfner, Gerhard D.

(56) Entgegenhaltungen:
- DE-U- 8 706 638
- FR-A- 1 246 255
- FR-A- 2 220 843
- GB-A- 1 508 972
- NL-A- 8 201 311
- US-A- 3 756 609
- US-A- 4 133 013
- PATENT ABSTRACTS OF JAPAN vol. 9, no. 76 (P-346) 1799 05 April 1985,& JP-A-59 207458

## Beschreibung

Die Erfindung bezieht sich auf ein Video-Kassetten-Wiedergabegerät zum wahlweisen Abspielen einer gewünschten Video-Kassette aus einer Gruppe von Video-Kassetten mit
- einem Kassettenwechsler,
- einem Video-Kassettenspieler, dem vom Kassettenwechsler die jeweils gewünschte Video-Kassette zufuhrbar ist,
- einem Fernsehbild-Wiedergabegerät, über dessen Bildröhre die ausgewählte, vom Videokassettenspieler abgespielte Video-Kassette wiedergebbar ist, wobei alle Geräteteile in einem Gehäuse gemeinsam funktionsfähig verbunden angeordnet sind und wobei das Gerät mit einem Programmwählmittel ausgerüstet ist.

In der DE-U-87 06 638.6 ist, gemäß dem Oberbegriff des Anspruchs 1, ein Videogerät beschrieben, welches in einem Gehäuse einen Videorecorder mit Monitor und einen automatischer Videokassettenwechsler mit Programmwahlschalter aufweist. Das Ganze bildet in dem Gehäuse eine technisch funktionelle und konstruktive Einheit. Was für ein Videorecorder zum Einsatz kommt und wie der Wechsler funktioniert ist nicht beschrieben.

Aus der GB-A-1 508 972 ist ein Wechsler für Audio-Kassetten bekannt, der einen karusselartigen Träger aufweist, auf dem im Kreis um die zentrale, vertikale Trägerachse verteilt Kassettenaufnabmen vorgesehen sind. Mit Hilfe einer Hebevorrichtung mit Stößel können nach Wahl einzelne Audio-Kassetten in einen Audio-Kassettenspieler von unten nach oben eingeführt werden.

Aus der NL-A-82 01 311 ist ein weiterer Wechsler für Audio-Kassetten bekannt, bei dem die Audio-Kassetten aus einem walzen- oder kastenförmigen Träger nach oben ausgeschoben und in einen Audiorecorder eingeschoben werden.

Aus der JP-A-59 207 458 ist ein Wechsler für Video-Kassetten bekannt, bei dem in einem um eine horizontale Achse umlaufenden Karussel Aufnahmen für Video-Kassetten vorgesehen sind. Die Video-Kassetten werden horizontal in einen daneben stehenden Videorecorder eingeschoben.

In der FR-A-1 246 255 ist ein Wechsler für Magnetbandspulen beschrieben. Die mit Video-Magnetbändern bewickelten Magnetbandspulen werden mittels einer Transportvorrichtung einem Magazin des Wechslers einzeln entnommen und dem zugehörigen Video-Bandspielgerät zugeführt. Der Wechsler, die Transportvorrichtung, das Video-Bandspielgerät und ein Video-Wiedergabegerät sind in einem für alle gemeinsamen Gehäuse untergebracht und in diesem funktionsfähig verbunden. Für das Abspielen der Spulen ist eine Selbstwählmöglichkeit vorgesehen.

Es ist Aufgabe der Erfindung, ein Video-Kassetten-Wiedergabegerät zu schaffen, das ein großes Fassungsvermögen für Videobandkassetten aufweist und dennoch so kompakt ist, daß es sich zur Aufstellung beispielsweise in Krankenhäusern, Altersheimen, Wartesälen und dergleichen eignet.

Die gestellte Aufgabe ist erfindungsgemäß dadurch gelöst, daß
- der Video-Kassettenspieler mit seinem Kassettenaufnahmefach nach unten angeordnet ist, um die Video-Kassetten mit ihren Kopfseiten vom Kassettenwechsler übernehmen zu können,
- die jeweils gewünschte Video-Kassette zum Abspielen mittels eines vertikal hochfahrbaren Stößels einer Transportvorrichtung in des Aufnahmefach des Video-Kassettenspielers einführber ist und nach dem Abspielen allein vertikal in den Kassettenwechsler zurückfallen kann, wozu der Kassettenwechsler oben offene Aufnahmen für die Video-Kassetten aufweist,
- der Kassettenwechsler mit wenigstens einem Bandförderträger versehen ist, der aus zwei im Abstand angeordneten, um horizontale Achsen umlaufenden Bandträgerrädern besteht, zwischen denen von ihnen geführte Förderbänder umlaufen, wobei die Aufnahmen für die Video-Kassetten an den Förderbändern angeordnet sind.

Ähnlich wie bei Musikautomaten in Gaststätten läßt sich dieses Video-Kassetten-Wiedergabegerät als Einheit in einem Aufenthaltsraum aufstellen und betreiben. Der Wechsel der Kassetten läßt sich mit dem als Bandförderer ausgebildeten Wechsler platzsparend durchführen. Die Kassette wird mit Hilfe des Stößels nur nach oben in die Aufnahme des Videorecorders eingeschoben; nach dem Abspielen und Auswerfen aus dem Videorecorder rutscht sie vertikal nach unten in die offene Kassettenaufnahme hinein. Zum Hineinrutschen in den Kassettenwechsler im Rahmen der Absenkbewegung wird die Schwerkraft besonders gut ausgenutzt.

Weitere Vorteile der Erfindung ergeben sich aus den Unteransprüchen.

Der Bildschirm des Gerätes ist zum mechanischen Schutz und, um das Licht weicher zu machen, mit einer Rauchglasscheibe abgedeckt. Die Tonwiedergabe kann auch drahtlos über Infrarotstrahlung und Kopfhörer erfolgen. Nachbarn, die nicht mithören wollen, werden auf diese Weise nicht gestört. Auch läßt sich so die Lautstärke individuell an das Gahör des Hörers anpassen.

Die Erfindung wird anhand des in den Zeichnungen dargestellten Ausführungsbeispiels näher erläutert. Es zeigen:
- Fig.1: eine Ansicht des Video-Kassetten-Abspielgerätes nach der Erfindung von der Ansichtsseite des Gehäuses her;
- Fig. 2: das Video-Kassetten-Wiedergabegerät bei entfernter Rückwand mit der Gesamtheit seiner Bauteile in vereinfachter Darstellung mit einem Kassettenwechsler, der als Karussell mit vertikaler Drehachse ausgebildet ist;
- Fig. 3: das die einzelnen Videokassetten aufnehmende Karussell nach Fig. 2, wobei nur das Mittelteil und drei Kassettenaufnahmen dargestellt sind;
- Fig. 4: einen Schnitt durch den Karussell-Kassettenwechsler längs der Linie IV - IV nach Fig. 3 in vereinfachter Darstellung;
- Fig. 5: einen teilweisen Schnitt durch die Transportvorrichtung zum Anheben der einzelnen Videokassetten;
- Fig. 6: in Verbindung mit Fig. 2 einen Mechanismus zum Wegschwenken des Video-Kassettenspielers aus dem Bestückungsbereich des Kassettenwechslers;
- Fig. 7: eine andere Ausführungsform des Kassettenwechslers mit einem Karussell mit horizontaler Drehachse;
- Fig. 8: einen Teilschnitt durch einen Wechsler nach Fig. 7 mit einem als Gewindestange ausgebildeten Stößel zum Heben und Senken abzuspielender Videokassetten;
- Fig. 9: eine andere Ausführungsform des Gerätes mit einem als Bandförderer ausgebildeten Kassettenwechsler;
- Fig. 10: eine Seitenansicht des Kassettenwechslers nach Fig. 9;
- Fig. 11: einen Teilschnitt durch den Kassettenwechsler nach den Fig. 9 und 10 mit einer Darstellung einer Transportvorrichtung mit Gewindetrieb und Gewindestößel;
- Fig. 12: die Anordnung des Kassettenwechslers nach den Fig. 9 bis 11 in Draufsicht gegenüber der Bildröhre des Gerätes;
- Fig. 13: die Anordnung von 2 Kassettenwechslern nach den Fig. 9 bis 12 in dem Gerät.

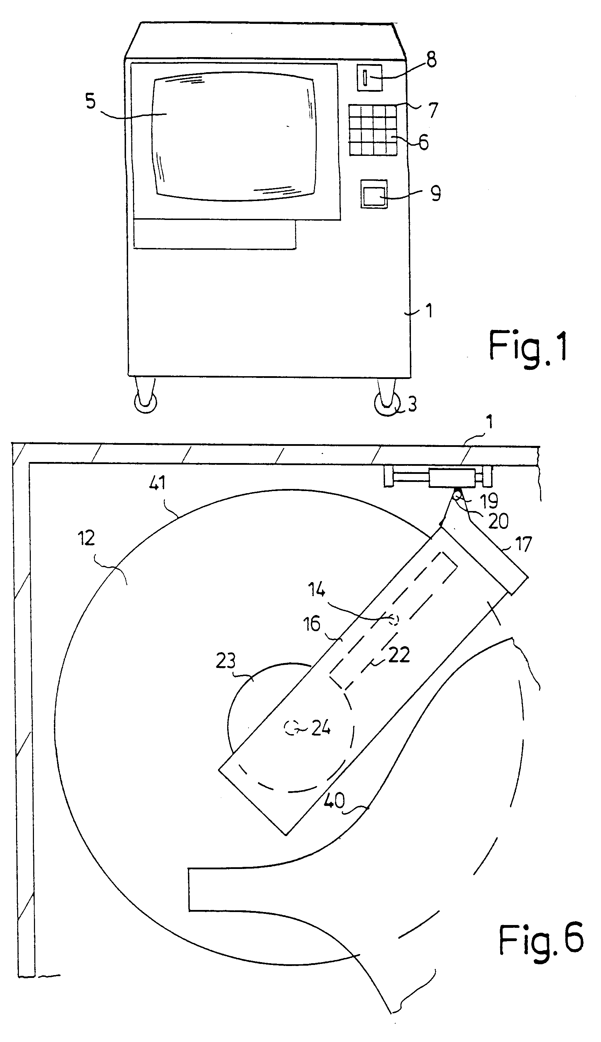

Fig. 1 zeigt das Video-Kassettengerät mit seinem Gehäuse 1, welches auf Rädern 3 verrollbar angeordnet ist. An der Vorderseite des Video-Kassetten-Wiedergabegerätes befindet sich hinter einer Rauchglasscheibe der Bildschirm 5 eines Fernsehbild-Wiedergabegerätes. Rechts neben dem Bildschirm 5 sind Tasten 6 für Fernsehprogramme vorgesehen. Oberhalb des Tastenfeldes 7 befindet sich eine Münzeingabe 8, und unterhalb des Tastenfeldes 7 ist eine Münzrückgabe angeordnet.

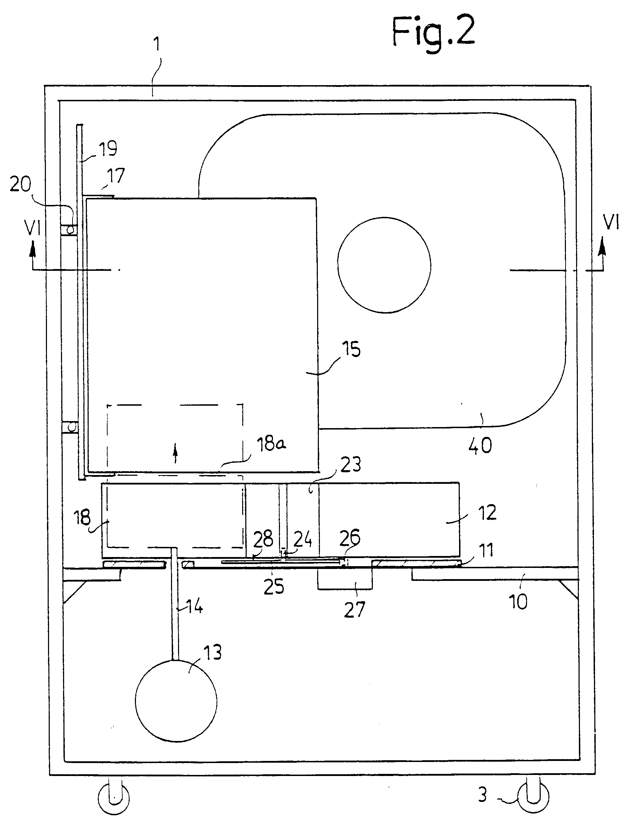

Fig. 2 zeigt das Gerät nach Fig. 1 bei entfernter Rückwand, teilweise schematisiert. Innerhalb des Gehäuses 1 ist auf einer Auflageplatte 10 und einer Zwischenplatte 11 ein Karussell-Kassettenwechsler 12 angeordnet. Dieser Karussell-Kassettenwechsler ist mit einer Transportvorrichtung 13 versehen, die einen Stößel 14 aufweist, mit dem gestrichelt dargestellte Videokassetten 18 aus dem Karussell-Kassettenwechsler 12 in einen Videorekorder 15 einschiebbar sind. Dieser Videorekorder 15, der in der Beschreibung nicht näher erläutert ist, ist an einem Halter 17 angeordnet, der selbstverständlich so ausgebildet sein muß, daß er den Videorekorder 15 mit seinem Gewicht voll tragen kann. Der Videorekorder 15 ist so aufgehängt, daß die Videokassetten 18 in das Kassettenaufnahmefach 18a von unten einschiebbar sind.

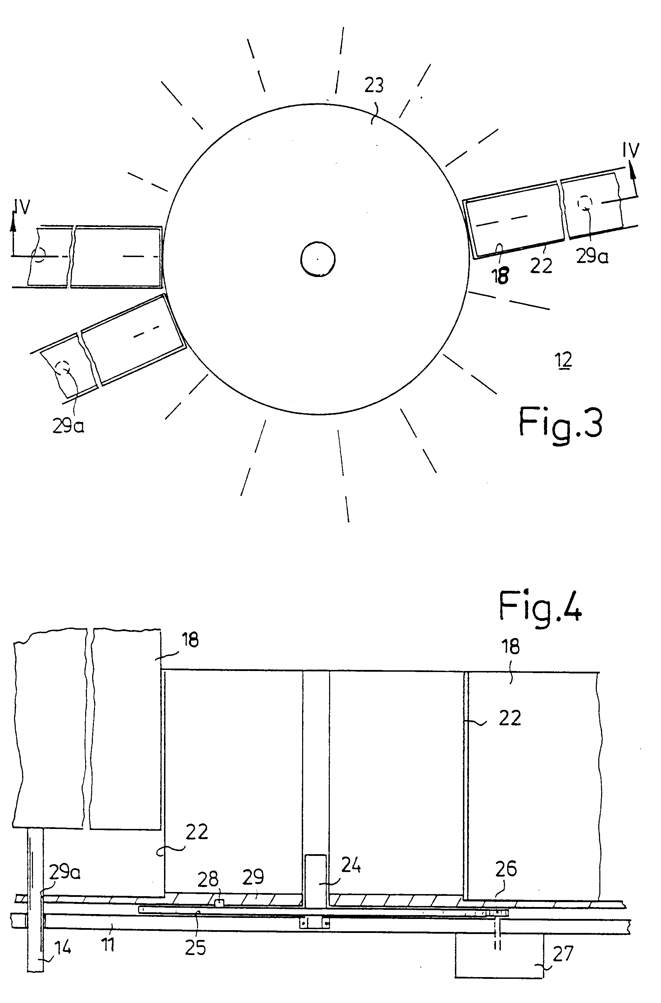

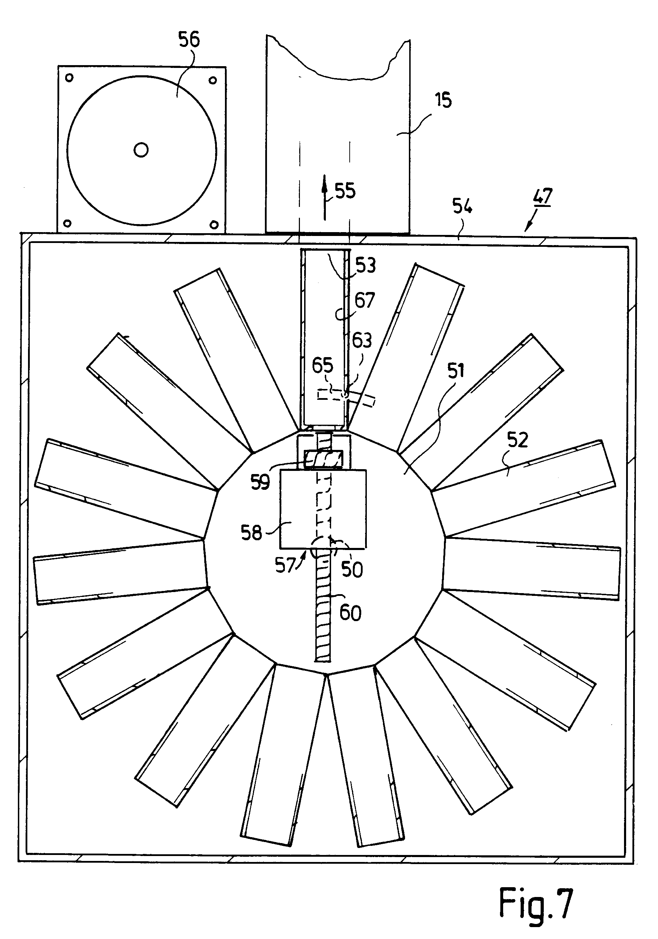

Fig. 3 zeigt den Karussell-Kassettenwechsler 12 teilweise in Draufsicht; er besteht aus einem Karussell, in dem radial einzelne Kassettenaufnahmen 22 angeordnet sind. Diese Kassettenaufnahmen 22 sind nach oben hin offen und reihen sich rings um das Zentrum 23 des Kassettenwechslers herum. Bei dem aufgeführten Beispiel sind 15 Kassettenaufnahmen 22 vorgesehen. In Fig. 3 sind nur drei Kassettenaufnahmen 22 mit ihrem innenliegenden Teil dargestellt. Die Kassettenaufnahmen haben alle die Länge von Videokassetten und sind nach außen hin durch eine rings umlaufende Wand 41 (Fig. 6) geschlossen.

Wie Fig. 4 anhand des Schnittes IV - IV in Fig. 3 zeigt, greift in das Zentrum 23 des Kassettenwechslers 12 ein Drehstift 24 ein. Dieser Drehstift 24 gehört zu einem Drehteller 25, der über ein Ritzel 26 von einem Motor 27 in Umlauf versetzbar ist. Der Drehteller 25 ist drehschlüssig verbunden mit dem Karussell-Kassettenwechsler 12. Dazu greift ein Stift 28 in den Boden 29 des Karussell-Kassettenwechslers 12 ein. Wie auf der linken Seite der Fig. 4 dargestellt ist, hat der Stößel 14, durch ein Bodenloch 29a greifend, gerade eine Kassette 18 teilweise nach oben gehoben in Richtung auf die Kassettenaufnahme 18a des Video-Kassettenspielers 15. Mit Hilfe des Motors 27 und des Stößels 14 kann die Kassettenaufnahme 12 jeweils in eine solche Stellung gebracht werden, daß eine gewünschte Kassette 18 in dem Kassettenaufnahmefach 18a des Video-Kassettenspielers 15 erfaßt und eingezogen wird.

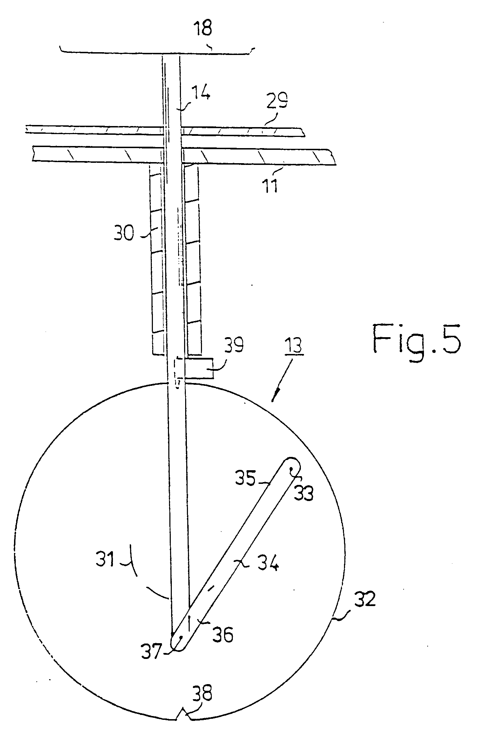

Fig. 5 zeigt die Transportvorrichtung 13 nach Fig. 2 bis 4 etwas ausführlicher. Der Stößel 14 läuft in einer Geradführung 30, die sicherstellt, daß er immer genau durch ein vor ihn gedrehtes Loch gegen eine Videokassette 18 stoßen kann, um diese nach oben in das Kassettenaufnahmefach 18a hineinzuschieben. Die Transportvorrichtung ist nach Art eines Kurbeltriebes ausgebildet. Hierzu treibt ein Motor 31 eine Kurbelscheibe 32 an, auf der mittels eines Drehlagers 33 eine Kurbelstange 34 gelagert ist. Das von dem an der Kurbelscheibe 32 gelagerten Ende 35 abliegende Ende 36 der Kurbelstange ist drehbar an dem Stößel 37 gelagert. Dreht sich die Kurbelscheibe 32, dann kann der Stößel 14 auf und ab fahren und entweder eine Kassette in das Kassettenfach 18a einschieben oder aber wieder zurücknehmen, so daß das Karussell erneut gedreht werden kann. Die jeweilige Endlage der Kurbelscheibe 32 wird mit Hilfe eines Schalteinschnittes 38 sichergestellt, der mit einem Schalter 39 zusammenwirkt.

Fig. 6 zeigt einen Schnitt durch das Gehäuse 1 des Gerätes in Richtung einer Linie VI - VI nach Fig. 2. Man erkennt dabei schematisch die Fernsehbildröhre 40, mit deren Hilfe das von dem Video-Kassettengerät 16 abgespielte Band wiedergebbar ist. Weiterhin erkennt man die Mantelfläche 41 des Kassettenwechslers 12, über dem das Video-Kassettengerät aufgehängt ist mit Hilfe der Halterung 17. Das Video-Kassettengerät ist über die Schiene 19 und das mit ihr zusammen wirkende Scharnier 20 so im Bereich des Gehäuses verschwenkbar, daß die Kassettenaufnahmen frei werden, um eine Videokassette durch eine andere Videokassette zu ersetzen.

Fig. 7 zeigt das Gerät mit einem anderen Kassettenwechsler 47, bei dem ein Karussell vorgesehen ist, das um eine horizontale Achse 50 drehbar ist. Auf der Achse 50 ist eine Förderscheibe 51 angeordnet, die auf ihrer Außenseite mit Kassettenaufnahmen 52 versehen ist. Die Kassettenaufnahmen 52 sind auf der von der Förderscheibe 51 wegweisenden Seite 53 offen. Über dem Gehäuse 54 des Kassettenwechslers nach Fig. 7 ist ein Videorekorder 15 angeordnet, in den die einzelnen Videokassetten in Richtung eines Pfeiles 55 einschiebbar sind.

Es ist ein Antiebsmotor 56 vorgesehen, mit dem über ein in Fig. 7 nicht dargestelltes Getriebe die Förderscheibe 51 in Umlauf versetzbar ist. Der Antriebsmotor 56 wird vorzugsweise mit elektronischen Impulsen gesteuert. Der Motor dreht aufgrund der elektronischen Impulssteuerung schrittweise um jeweils 24°. Auf diese Weise können in einzelnen Schritten einzelne Kassettenaufnahmen 52 unter den Videorekorder 15 gedreht werden. Es ist eine nicht näher beschriebene elektronische Steuerung vorgesehen, mit der wahlweise jede einzelne Kassettenaufnahme 52 mit Hilfe des Schrittmotors unter den Videorekorder 15 drehbar ist.

Fig. 7 zeigt noch eine abgewandelte Transportvorrichtung 57, die mit einem Antriebsmotor 58 versehen ist, der ein innen verzahntes Schneckenrad 59 antreibt. In dem innen verzahnten Schneckenrad ist ein Gewindestößel 60 geführt, der durch Drehen des Schneckenrades 59 auf und ab fahrbar ist. Mit Hilfe dieses Stößels wird ebenso wie mit dem Stößel des Kurbeltriebes nach Fig. 5 die jeweils gewünschte Kassette aus der jeweiligen Aufnahme 52 in Richtung des Pfeiles 55 nach oben in den Videorekorder 15 gefördert, bis der Videorekorder die Videokassette selbst aufnimmt und in die Spielstellung bringt. Beim Zurückfahren der Videokassette nach ihrem Abspielen sorgt der Gewindestößel 60 dafür, daß die Videokassette nicht von sich in die jeweilige Kassettenaufnahme 52 hineinfällt, sondern langsam in diese herabgelassen wird.

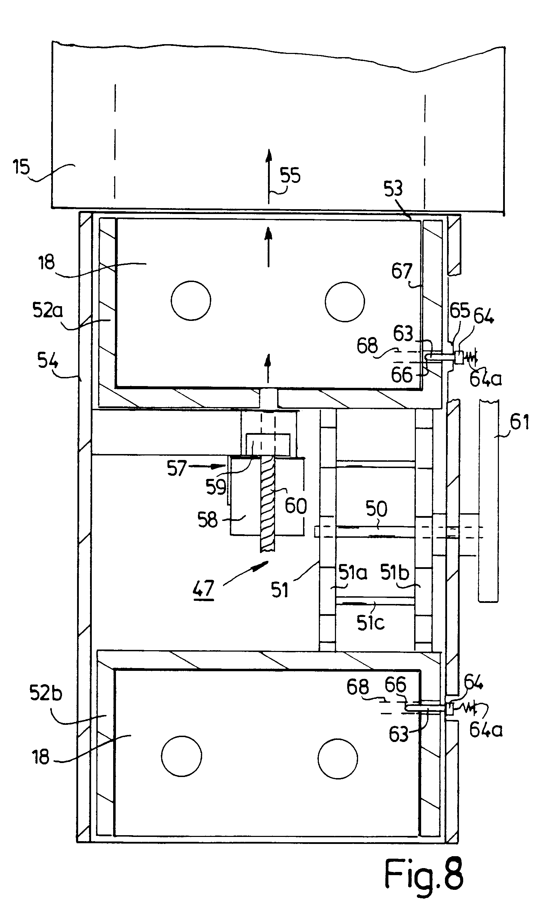

Fig. 8 zeigt eine Seitenansicht des Kassettenwechslers 47 nach Fig. 7. Man erkennt das Gehäuse 54 und den oberhalb des Gehäuses 54 angeordneten Videorekorder 15. Die Förderscheibe 51 besteht aus zwei Teilscheiben 51a und 51b, die über Stege 51c miteinander verbunden sind. Die Förderscheibe 51 ist über ihre Achse 50 und einen Riementrieb 61 mittels des Antriebsmotors 56 nach Fig. 7 drehbar, um jeweils eine der 15 Kassetten in die aus Fig. 8 zu erkennende obere Stellung der Kassettenaufnahme 52a zu bringen. Es ist in Fig. 8 wieder das innen verzahnte Schneckenrad 59 zu sehen, in dem der Gewindestößel 60 geführt ist und nach oben oder unten gefahren werden kann, um eine Videokassette 18 in die Spielstellung im Videorekorder 15 zu bringen.

Aus Fig. 8 ist zu erkennen, daß in der Aufnahme 52a ebenso wie in allen anderen Aufnahmen ein Stift 63 geführt ist, der auf seiner Außenseite mit einem Kopf 64 versehen ist. Der Stift 63 ist in der oberen Stellung der Kassettenaufnahme 52a auf einen Auflaufwulst 65 aufgelaufen, so daß das vordere Ende 66 des Stiftes aus dem Innenraum 67 der Kassettenaufnahme 52a herausgezogen ist gegen die Kraft einer Feder 64a. Die Plazierung des Stiftes 63 ist in Fig. 7 angedeutet. Verläßt der Stift 63 die Wulst 65 beim Drehen des Kassettenwechslers, dann drückt die Feder 64a den Stift so weit nach innen, daß er in eine durch Strichelung angedeutete Nut 68 der Videokassette 18 seitlich eingreifen kann. Dies ist an der Unterseite der Fig. 8 mit der Kassetenaufnahme 52b zu erkennen. Dadurch, daß der Stift in die Nut 68 eingreift, ist die Videokassette 18, die auf er Unterseite des Karussells frei hängt, gegen ein Herausfallen gesichert.

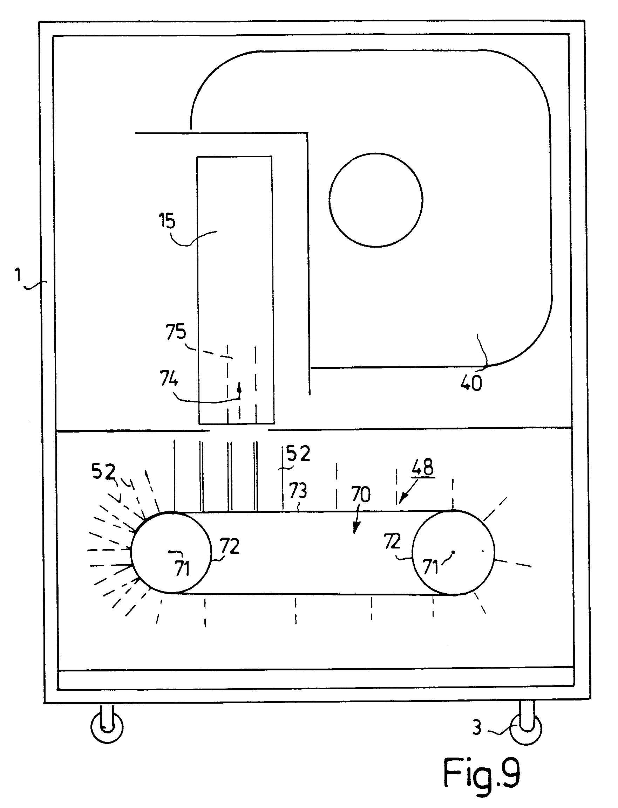

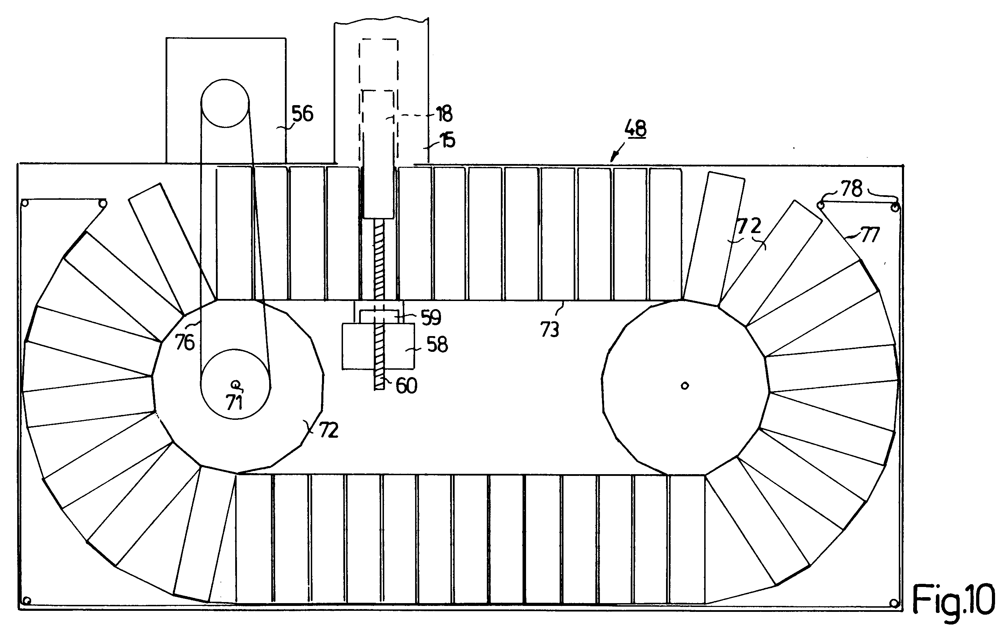

Fig. 9 zeigt eine andere Ausführungsform mit einem Kassettenwechsler 48 in dem Gerät. Man erkennt einen Bandförderträger 70, der aus zwei auf Abstand angeordneten, um horizontale Achsen 71 drehbaren Bandträgerrädern 72 besteht, zwischen denen Förderbänder 73 umlaufen. Die Förderbänder 73 sind auf der Außenseite wie bei den anderen Ausführungsbeispielen mit nach außen offenen Kassettenaufnahmen 52 versehen. Die Kassettenaufnahmen 52 können der Reihe nach unter den Videorekorder 15 gebracht werden und lassen sich, wie ein gestrichelter Pfeil 74 andeutet, in das Aufnahmefach 75 des Kassettenrekorders 15 einführen. Vor dem Kassettenrekorder 15 befindet sich wie bei der Ausführungsform nach Fig. 2 bereits gezeigt ist der Bildschirm 40. Der Kassettenwechsler nach Fig. 9 kann, wie deutlicher aus Fig. 10 zu entnehmen ist, 40 Videokassetten in Kassettenaufnahmen 52 aufnehmen. Damit ist die Vorhaltekapazität des Gerätes wesentlich vergrößert. Fig. 10 zeigt auch wieder den Motor 58 der Transportvorrichtung, das innen verzahnte Schneckenrad 59 und den hoch fahrbaren Gewindestößel 60. Die Bandträgerräder 72 werden über einen Riemenzug 76 von dem Antriebsmotor 56 gedreht nach Maßgabe der nicht näher beschriebenen, jedoch bereits angedeuteten Elektronik. Die Förderbänder 73 sind vorzugsweise als Zahnriemen ausgebildet.

Bei der Darstellung nach Fig. 10 sorgt ein Rückhalteband 77 dafür, daß die Videokassetten 18 nicht aus den nach außen offenen Kassettenaufnahmen 52 herausfallen. Dieses Rückhalteband 77 ist über Rollen 78 geführt und schließt die Öffnungen in dem unteren Bereich des Kassettenwechslers ab. Vorzugsweise ist aber auch bei dem Kassettenwechsler nach Fig. 10 eine Stiftarretierung vorgesehen, wie sie bereits in Fig. 8 beschrieben ist.

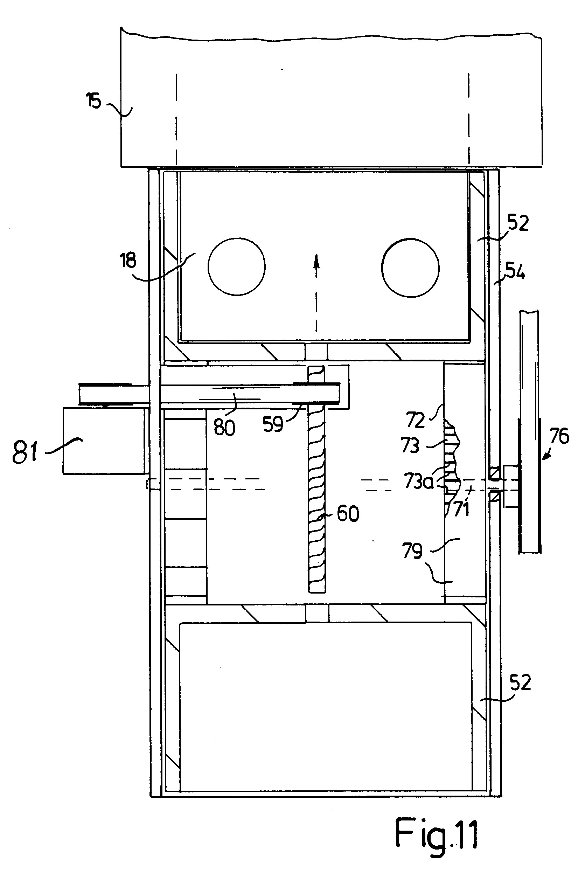

Fig. 11 zeigt eine Seitenansicht des offenen Gerätes, wobei im Rahmen eines Teilschnittes die gerade von oben nach unten umkippenden Kassettenaufnahmen 52 nicht dargestellt sind. Man erkennt deshalb die Zahnriemen 73 mit ihrer Zahnung 73a und nur die Fußflächen 79 der Kassettenaufnahmen, die gerade umkippen. Der Antrieb 76 entspricht dem Antrieb nach Fig. 8. Die Transportvorrichtung für die einzelnen Videokassetten 18 in den Videorekorder 15 entspricht auch der Ausführungsform nach Fig. 8. In Fig. 11 ist nur zu erkennen, daß das innen verzahnte Schneckenrad 59 über einen Keilriemen 80 von einem außen liegenden Antriebsmotor 81 angetrieben wird.

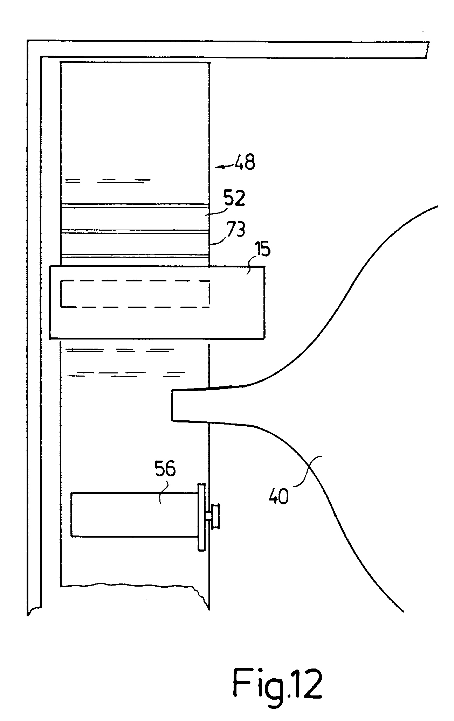

Fig. 12 zeigt eine Draufsicht auf den Kassettenwechsler nach den Fig. 9 bis 11 mit Antriebsmotor 56, Videorekorder 15 und Transportbändern 73, die nicht im einzelnen aufgezeichnet die Kassettenaufnahmen 52 tragen. Die Bildröhre 40 liegt seitlich des Videorekorders 15.

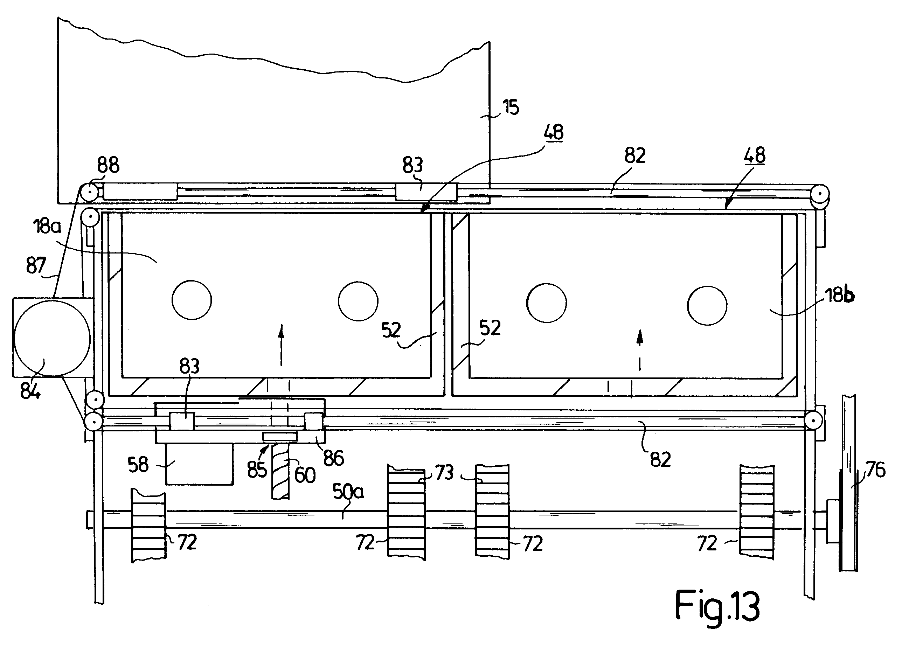

Fig. 13 zeigt eine Ausführungsform des Gerätes mit zwei nebeneinander angeordneten Kassettenwechslern 48 des Förderbandtyps. Da jeder einzelne kassettenwechsler des Förderbandtyps 40 Kassetten aufnehmen kann, nehmen die zwei nebeneinander liegenden Wechsler bereits 80 Bänder auf, und es ist sogar möglich bei den derzeitigen Tiefen von Fernsehröhren drei Wechsler des Förderbandtyps nebeneinander anzuordnen. Bei der Ausführungsform nach Fig. 13 sind nur die gemeinsame Antriebswelle 50a mit dem Antrieb 76 und die Bandträgerräder 72 mit den Förderbändern 73 angedeutet. Wie bei der Ausführungsform nach den Fig. 9 bis 11 werden die einzelnen Kassettenaufnahmen 52 mittels der Förderbänder 73 bewegt. Damit Videokassetten 18a und 18b in den Videorekorder 15 eingefahren werden können mit Hilfe des vom Motor 58 angetriebenen Gewindestößels 60, ist der Videorekorder 15 verfahrbar gelagert auf Führungsstangen 82, auf denen am Videorekorder 15 vorgesehene Führungshülsen 83 entlanglaufen können. Das Verfahren des Videorekorders 15 wird vorgenommen mit Hilfe eines Verfahrmotors 84. Zusammen mit dem Videorekorder 15 wird auch die Transportvorrichtung mit dem Gewindestößel 60 verfahren. Diese Transportvorrichtung 85 ist dazu auf einem Schlitten 86 montiert. Dem Verfahren dient ein Seilzug 87, der über Rollen 88 geleitet ist.

Der Bildschirm ist bevorzugt hinter einer entspiegelten Rauchglasscheibe angebracht, zum Schutz der Bildröhre und um das Bild zum Schutz der Augen des Betrachters weicher zu machen. Hierfür kann auch ein geeigneter Filter eingesetzt werden.

Die Tonübertragung erfolgt insbesondere drahtlos durch Infrarot oder Ultrakurzwellen auf Kopfhörer, wobei der betreffende Sender im Wiedergabegerät und der betreffende Empfänger in den Kopfhörern angebracht ist. Gegebenenfalls kann der Empfänger auch an einer Wandleiste als zentraler Empfänger angebracht werden, welcher seinerseits Anschlüsse für die Kopfhörer aufweist.

Der Motor zum Antrieb des Kassettenwechslers ist ein elektronisch über Impulse gesteuerter Schrittmotor. Der Motor für die Kassetteneinführung ist ebenfalls ein elektronisch gesteuerter Schrittmotor. Die Steuerung erfolgt jeweils in an sich bekannter Weise.

## Patentansprüche

1. Video-Kassetten-Wiedergabegerät zum wahlweisen Abspielen einer gewünschten Video-Kassette aus einer Gruppe von Video-Kassetten mit
- einem Kassettenwechsler (48),
- einem Video-Kassettenspieler (15), dem vom Kassettenwechsler (48) die jeweils gewünschte Video-Kassette (18) zuführbar ist,
- ein am Fernsehbild-Wiedergabegerät (5), über dessen Bildröhre (40) die ausgewählte, vom Video-Kassettenspieler (15) abgespielte Video-Kassette (18) wiedergebbar ist, wobei alle Geräteteile in einem Gehäuse (1) gemeinsam funktionsfähig verbunden angeordnet sind und wobei das Gerät mit einem Programmwählschalter ausgerüstet ist, dadurch gekennzeichnet, daß
- der Video-Kassettenspieler (15) mit seinem Kassettenaufnahmefach (75) nach unten angeordnet ist, um die Video-Kassetten (18) mit ihren Kopfseiten vom Kassettenwechsler (48) übernehmen zu können,
- die jeweils gewünschte Video-Kassette (18) zum Abspielen mittels eines vertikal hochfahrbaren Stößels (14) einer Transportvorrichtung (13, 57) in das Aufnahmefach (75) des Video-Kassettenspielers (15) einführbar ist und nach dem Abspielen allein vertikal in den Kassettenwechsler zurückfallen kann, wozu der Kassettenwechsler (48) oben offene Aufnahmen (52) für die Video-Kassetten aufweist,
- der Kassettenwechsler (48) mit wenigstens einem Bandförderträger (70) versehen ist, der aus zwei im Abstand angeordneten, um horizontale Achsen (71) umlaufenden Bandträgerrädern (72) besteht, zwischen denen von ihnen geführte Förderbänder (73) umlaufen, wobei die Aufnahmen (52) für die Video-Kassetten (18) an den Förderbändern (73) angeordnet sind.

2. Video-Kassetten-Wiedergabegerät nach Anspruch 1, dadurch gekennzeichnet, daß die Transportvorrichtung (13) mit einem Kurbeltrieb versehen ist, der den Stößel (14) zum Anheben und Absenken der jeweils gewünschten Video-Kassette (18) auf und ab bewegt.

3. Video-Kassetten-Wiedergabegerät nach Anspruch 1, dadurch gekennzeichnet, daß die Transportvorrichtung (57) mit Gewindetrieb (59) versehen und der Stößel (60) als Gewindestange ausgebildet ist, die vom Gewindetrieb (59) zum Anheben und Absenken der jeweils gewünschten Video-Kassette (18) auf und ab drehbar ist.

4. Video-Kassetten-Wiedergabegerät nach Anspruch 1, dadurch gekennzeichnet, daß die Video-Kassetten (18) wenigstens in den Aufnahmen (52), aus denen sie beim Umlaufen nach unten herausfallen können, gegen ein Herausfallen gesichert sind mittels einer Kaltevorrichtung (63).

5. Video-Kassetten-Wiedergabegerät nach Anspruch 4, dadurch gekennzeichnet, daß die Haltevorrichtung (63) aus wenigstens einem Stift je Aufnahme (52) besteht, der unter Federkraft von außen in das Innere (67) der Aufnahme (52) hinein gegen die jeweilige Video-Kassette (18) gedrückt wird und der an den Stellen, an denen eine Video-Kassette (18) entnommen werden kann, gegen die Federkraft aus der Aufnahme herausgezogen wird.

6. Video-Kassetten-Wiedergabegerät nach Anspruch 5, dadurch gekennzeichnet, daß der Stift (63) außerhalb der Aufnahme (52) mit einem Kopf (64) versehen ist, der im Bereich der Stellen, in denen die Video-Kassette (18) entnommen werden kann, von einem Auflaufwulst (65) des Kassettenwechslers (48) herausgehoben ist.

7. Video-Kassetten-Wiedergabegerät nach Anspruch 5, dadurch gekennzeichnet, daß der Stift (63) in eine Vertiefung (68) des Video-Kassettengehäuses (18) hineingreift.

8. Video-Kassetten-Wiedergabegerät nach Anspruch 7, dadurch gekennzeichnet, daß die Vertiefung eine Nut (68) an dem Gehäuse ist.

9. Video-Kassetten-Wiedergabegerät nach Anspruch 1, dadurch gekennzeichnet, daß vorzugsweise drei Kassettenwechsler (48) vorgesehen sind und der Video-Kassettenspieler (15) quer zu den einzelnen Kassettenwechslern (48) verschiebbar ist.

10. Video-Kassetten-Wiedergabegerät nach einem der vorhergehenden Ansprüche, dadurch gekennzeichnet, daß der Bildschirm (40) hinter einer Rauchglasscheibe angeordnet ist.

11. Video-Kassetten-Wiedergabegerät nach einem der vorhergehenden Ansprüche, dadurch gekennzeichnet, daß es einen Infrarot-Sender zur Tonübertragung aufweist.

## Claims

1. Videocassette-reproducing-apparatus for selective play back of a wanted videocassette out of a group of videocassettes with;
- a cassette-changer(48),
- a videocassette-player(15) to whom the respective wanted videocassette(18) from the cassette-changer(48) can be directed to,
- a picture-tube(40) in the television-reproducing-apparatus(5) on which the selected videocassette(18) played back on the video-player(15) can be reproduced, whereby all apparatus components are combined functionally in one housing(1), and whereby the apparatus is equipped with a program-selecting switch, and is distinguished in that way,
- that the video-player(15), is arranged with its cassette-compartment(75) downward to take over the videocassettes(18) from the cassette-changer(48) from the head side,
- that the respective wanted videocassette(18) to be played back, can be inserted into the cassette-compartment(75) of the videocassette-player(15) by means of a vertical raising pestle(14) of a transport-device(13, 57) and can vertically drop back alone into the cassette-changer after being played back, for which the cassette-changer(48) shows open to the top cassette-recipients(sleeves(52),
- that the cassette-changer(48) is equipped with at least one belt carrier(70) which consists of two conveyor-wheels(72) arranged at a distance around which the conveying-belts(73), guided by the wheels, are rotating between level axles(71),
whereby the cassette-recipients(sleeves(52) for the videocassettes(18) are arranged on the conveyor- belts(73).

2. Videocassette-reproducing-apparatus according to claim 1 is distinguished in that way, that the transport-device(13) is equipped with a crank-drive which moves the pestle(14) up and down to raise or lower the respective wanted videocassette(18).

3. Videocassette-reproducing-apparatus according to claim 1 is distinguished in that way, that the transport-device(75) is equipped with a screw-threaded drive(59) and the pestle(60) is constructed as a screw-threaded rod to be turned up or down by drive(59) to raise or lower the respective wanted videocassette(18).

4. Videocassette-reproducing-apparatus according to claim 1 is distinguished in that way, that the videocassettes(18) are secured with a holding-device(63), which prevents the cassettes from falling down out of the recipients(sleeves(52) when rotating.

5. Videocassette-reproducing-apparatus according to claim 4, is distinguished in that way, that the holding-device(63) consists of at least one pin per recipient(sleeve(52), which is pushed under spring tension from the outside through to the inside(67) of the recipient(sleeve(52) against the respective videocassette(18) and which is pulled out against spring tension at the places where the videocassette(18) can be taken out of the recipient(sleeve).

6. Videocassette-reproducing-apparatus according to claim 5, is distinguished in that way, that the pin(63) is provided with a head(64) outside of the recipient(sleeve), that is levered out by running onto a lilting bulge(65) of the cassette-changer(48) at the places where the videocassettes(18) can be taken out.

7. Videocassette-reproducing-apparatus according to claim 5, is distinguished in that way, that the pin(63) interlocks in a groove(68) of the videocassette housing(18).

8. Videocassette-reproducing-apparatus according to claim 7, is distinguished in that way, that there is a groove(68) on the housing.

9. Videocassette-reproducing-apparatus according to claim 1 is distinguished in that way, that preferably three cassette-changers(48) are provided and that the video-player(15) can be moved transversally to the particular cassette-changer(48).

10. Videocassette-reproducing-apparatus according to any of the previous claims, is distinguished in that way, that the viewing screen(40) is situated behind a pane of tinted glass.

11. Videocassette-reproducing-apparatus according to any of the previous claims, is distinguished in that way, that it is equipped with an infrared-sound-transmitter.

## Revendications

1. Un appariel de réédition pour passer des cassettes-vidéo permettant de passer une cassette-video, qui a été préalablement choisie parmi un contingent de cassettes déjà existant; cet appariel sera accompagné:
- d'un changeur de cassettes(48),
- d'un lectuer de cassettes(15), vers lequel la cassette choisie(18) sera introduite et cela grâce au changeur de cassettes(48),
- d'un appariel de réédition téléisié(5) surmonté d'une lampe réceptrice(40) permettant la diffusion de la cassette-vidéo(18) qui se trouvera dans le lecteur de cassettes(15); en conséquence tous les élements de l'appareillage se trouveront disposés tous ensemble de telle facon qui'ils pourront fonctionner dans leur boîtier(1) et pour assurer ce fonctionnement l'appareillage complet sera muni d'un programme commutateur de choix; cet appareillage par ailleurs sera qualifié de la caracteristique suivante:
- le lecteur de cassettes(15), avec son compartiment assimilateur de cassettes(75), sera placé renversé vers le bas, afin de pouvoir saisir les cassettes-vidéo hors du changeur de cassettes(48) et cela en aggrippant leur côté-tête,
- pour cela la cassette-vidéo(18) choisiie pour la diffusion sera introduite dans le compartiment assimilateur(75) du lecteur de cassettes(15) grâce à un pilon(14) se déplacant de facon verticale et qui appartient lui-même à l'appareil de transport (13, 57); ce qui permettra alors à la cassette-vidéo, sa diffusion achevée, de retomber automatiquement verticalement dans le changeur de cassettes, puique le changeur de cassettes(48) présentera des fentes réceptrices(52 tournées vers le haut de l'appareillage afin même de rcevoir la cassette-vidéo rentrant en question,
- le changeur de cassettes(48) sera muni d'au moins un tapis convoyeur(70), ce tapis convoyeurse composera de deux rouages convoyeurs(72) se mouvant euxmêmes autour de deux axes(71) horizontaux disposés à l'écart l'un de l'autre, ces rouages, eux, circuleront entre les bandes transporteuses(73) qu'ils actvent, et cela de telle facon que les fentes réceptrices(52) pour les cassettes-vidéo(18) seront disposées tout autour de ces bandes transporteuses(73).

2. Un appareil de réédition pour passer des cassettes-vidéo, comme au paragrqaphe 1., qualifié de la caracteristigue suivante:
le dispositif de transport(13) sera muni d'une propulsion à manivelle qui mettra en action le pilon(14) lequel, lui, soulevera et abaissera respectivement la cassette-vidéo(18) préalablement choisie.

3. Un appareil de réédition pour passer des cassettes-vidéo, comme au paragraphe 1., qualifié de la caractéristique suivante:
le dispositif de transport(75) sera muni d'une propusion à pas de vis(59), alors que le pilon(60) servira d'arbre de transmission, permettant à ce denier d'être pivoté dans un mouvement de va et vient, afin qu'il puisse lui soulever ou abaisser à chaque fois la cassette-vidéo choisie.

4. Un appareil de réédition pour passer des cassettes-vidéo, comme au paragraphe 1., qualifié de la caractéristique suivante:
les cassettes-vidéo(18) seront munies d'un dispositifd'arrêt(63) qui les empêchera de tomber, tout au moins dans les fentes réciptrices(52), d'où elles pourraient glisser vers le bas pendant quelles sont transportées.

5. Un appareil de réédition pour passer des cassettes-vidéo, comme au paragraphe 4., qualifié de la caractéristique suivante:
le dispositifd'arrêt(63) consistera d'au moins une cheville par chaque fente réciptrice(52), cheville qui sera appuyée, grâce à un systéme de ressort, de dehors vers dedans(67) sur la cassette-vidéo(18) venant d'être choisie et cela à l'endroit juste où cette cassette, poussée par le systéme ressort, sera expulsée.

6. Un appareil de réédition pour passer des cassettes-vidéo, comme au paragraphe 5., qualifié de la caractéristique suivante:
la cheville(63) sera munie d'un contacteur(64), alors qu'elle se trouve hors de la fente réceptrice(52), lequel à proximité des endroits, où justement la cassette-vidéo(18) peut être extraite, sera neutralisé grâce à un contact en renflement(65) se trouvant sur le changeur de cassettes(48).

7. Un appareil de réédition pour passer des cassettes-vidéo, comme au paragraphe 5., qualifié de la caractéristique suivante:
la cheville(63) s'engrènera dans une cavité(68) du boîtier de la cassette-vidéo(18).

8. Un appareil de réédition pour passer des cassettes-vidéo, comme au paragraphe 5., qualifié de la caractéristique suivante:
la cavité du boîtier sera en fait une rainure(68).

9. Un appareil de réédition pour passer des cassettes-vidéo, comme au paragraphe 1., qualifié de la caractéristique suivante:
on prévoira de préférence trois changeurs de cassettes(48), et le lecteur de cassettes-vidéo(15) pourra coulisser transversalement en direction de chacun des changeurs de cassettes(48).

10. Un appareil de réédition pour passer des cassettes-vidéo, à partir d'un des paragraphes précédents, qualifié de la caractéristique suivante:
l'ecran du téléviseur(40) sera placé derrière une vitre en verre fumé.

11. Un appareil de réédition pour passer des cassettes-vidéo, à partir d'un des paragraphes précédents, qualifié de la caractéristique suivante:
l'equipement d'un émetteur à infrarouge servira à accuser la transmission du son.
